# EUROPEAN PATENT APPLICATION

(11) **EP 4 664 327 A1**
(43) Date of publication of application: **17.12.2025**
(21) Application number: 24181755.0
(22) Date of filing: 12.06.2024
(51) Int. Cl.: G06F 18/23213, G06V 10/74, G06V 10/762, G06V 10/77, G06V 20/13, G06F 18/2433

(54) **APPARATUS AND METHOD FOR CHANGE DETECTION IN IMAGES**

(71) Applicant: Fraunhofer-Gesellschaft zur Förderung der angewandten Forschung e.V., 80686 München (DE)
(72) Inventor: Gollapalli, Sai Kiran Srivatsav, 90411 Nürnberg (DE); Dürrbeck, Konrad, 90411 Nürnberg (DE); Fischer, Roland, 90411 Nürnberg (DE); Veres-Homm, Uwe, 90411 Nürnberg (DE); Chamberlain, Andrew, 90411 Nürnberg (DE); Obaidullah, Sk Md, 90411 Nürnberg (DE)
(74) Representative: Schairer, Oliver Michael

(57) **Abstract**

An apparatus for image pair analysis according to an embodiment is provided. The apparatus comprises a metrics determiner (110) for determining three or more metrics for each image pair of a plurality of image pairs. Each of the three or more metrics indicates a metric for a difference between two images of the image pair. Moreover, the apparatus comprises a dimensionality reducer (120) for conducting a dimensionality reduction to obtain two or more principal components depending on the three or more metrics for each image pair of the plurality of image pairs. Furthermore, the apparatus comprises a clustering module (130) for clustering the plurality of image pairs into two or more clusters by assigning each of the plurality of image pairs to one of the two or more clusters depending on the two or more principal components of each of the plurality of image pairs. Moreover the apparatus comprises an output interface (140) for outputting information on the clustering of the plurality of image pairs or for outputting information that depends on the clustering of the plurality of image pairs.

## Description

### Technical field of the invention:

The present invention relates to an apparatus and a method for change detection in images, e.g., using statistical and advanced analytical techniques, and, in particular, to change detection in brownfield analysis from satellite imagery using statistical and advanced analytical techniques.

### Background of the invention:

In the field of remote sensing for satellite image analysis, change detection (CD) is an important task. Change detection may, e.g., be conducted for a specific geographic area over different time frames to observe the geospatial changes in that particular location.

For example, often, areas have been photographed by satellites in high resolution and later on it shall be determined whether or not updated (satellite) photos are necessary. For determining whether or not (significant) changes occurred in an already photographed area, often, only low resolution photos are available.

More than that, often, user analysis and user interaction is necessary to determine whether or not changes in subsequent images of the same area are really significant to determine whether older (high resolution) images shall be replaced by updated high-resolution photos.

Analysing a large amount of image pairs of a (e.g., high-resolution) older image and a (e.g., low-resolution) newer image results, however, in a very high workload for a user. Therefore, it would be appreciated if a machine-supported pre-selection of those image pairs would be provided, in which significant changes in subsequent images can be expected.

### Summary of the invention:

The object of the present invention is to provide improved concepts for change detection in images. The object of the present invention is solved by an apparatus according to claim 1, by a method according to claim 14 and by a computer program according to claim 15.

An apparatus for image pair analysis according to an embodiment is provided. The apparatus comprises a metrics determiner for determining three or more metrics for each image pair of a plurality of image pairs. Each of the three or more metrics indicates a metric for a difference between two images of the image pair. Moreover, the apparatus comprises a dimensionality reducer for conducting a dimensionality reduction to obtain two or more principal components depending on the three or more metrics for each image pair of the plurality of image pairs. Furthermore, the apparatus comprises a clusterer for clustering the plurality of image pairs into two or more clusters by assigning each of the plurality of image pairs to one of the two or more clusters depending on the two or more principal components of each of the plurality of image pairs. Moreover the apparatus comprises an output interface for outputting information on the clustering of the plurality of image pairs or for outputting information that depends on the clustering of the plurality of image pairs.

According to an embodiment, the dimensionality reducer may, e.g., be configured to conduct the dimensionality reduction to obtain exactly two principal components from the three or more metrics for each image pair of the plurality of image pairs.

In an embodiment, the metrics determiner may, e.g., be configured to normalize the three or more metrics of each image pair of the plurality of image pairs to obtain three or more normalized metrics of each image pair of the plurality of image pairs. The dimensionality reducer may, e.g., be configured to conduct the dimensionality reduction using the three or more normalized metrics of each image pair of the plurality of image pairs to obtain the two or more principal components.

According to an embodiment, the metrics determiner may, e.g., be configured to determine the three or more metrics for each of the plurality of image pairs, such that the three or more metrics comprise three or more of the following metrics:
a mean squared error metric,
a peak signal-to-noise ratio metric,
an ERGAS metric,
a visual information fidelity metric.

In an embodiment, the metrics determiner may, e.g., be configured to determine the three or more metrics for each of the plurality of image pairs, such that the three or more metrics comprise the mean squared error metric, the peak signal-to-noise ratio metric, the ERGAS metric, and the visual information fidelity metric.

According to an embodiment, the clustering module may, e.g., be configured to assign each of the plurality of image pairs to one of the two or more clusters depending on the two or more principal components of each of the plurality of image pairs, so that each cluster of the two or more clusters indicates whether or not a significant difference between two images of an image pair of the plurality of image pairs within the cluster is likely.

In an embodiment, the output interface may, e.g., be configured to output image pairs of an example subset of the plurality of image pairs which are comprised by a particular cluster of the two or more clusters, wherein a number of image pairs of the example subset being output is smaller than a total number of image pages being comprised by the particular cluster.

According to an embodiment, the number of image pairs of the example subset being output may, e.g., be at least 90 % smaller than the total number of image pages being comprised by the particular cluster.

In an embodiment, the apparatus may, e.g., comprise an input interface which allows a user to input for each image pair of the image pairs of the example subset if the user agrees or if the user does not agree with the association of the image pair to the cluster or if the user cannot decide on an agreement to the association. The apparatus may, e.g., be configured to store the input.

According to an embodiment, the clustering module may, e.g., be configured to conduct clustering the plurality of image pairs two or more times to obtain two or more cluster configurations. For each of the two or more times, the clustering module may, e.g., be configured to cluster the plurality of image pairs into a different number of clusters.

In an embodiment, the clustering module may, e.g., be configured to conduct a K means clustering algorithm depending on the two or more principal components of each of the plurality of image pairs to assign each the plurality of image pairs to one of two or more clusters.

According to an embodiment, the clustering module may, e.g., be configured to conduct clustering the plurality of image pairs two or more times by conducting a K means clustering algorithm to obtain two or more cluster configurations, wherein for each of the two or more times, the K means clustering algorithm is conducted with a different K, K being an integer with K ≥ 2.

In an embodiment, the apparatus may, e.g., be configured to indicate all image pairs of those of the two or more clusters, or those of the two or more clusters, for which a significant difference between two images of an image pair of the plurality of image pairs within the cluster is likely.

Moreover, a method for image pair analysis according to an embodiment is provided. The method comprises:
- Determining three or more metrics for each image pair of a plurality of image pairs, wherein each of the three or more metrics indicates a metric for a difference between two images of the image pair.
- Conducting a dimensionality reduction to obtain two or more principal components depending on the three or more metrics for each image pair of the plurality of image pairs.
- Clustering the plurality of image pairs into two or more clusters by assigning each of the plurality of image pairs to one of the two or more clusters depending on the two or more principal components of each of the plurality of image pairs. And:
- Outputting information on the clustering of the plurality of image pairs or for outputting information that depends on the clustering of the plurality of image pairs.

Furthermore, a computer program is provided, wherein the computer program is configured to implement the above-described method when being executed on a computer or signal processor.

Embodiments introduce a detailed methodology for detecting changes in brownfield sites, utilizing high-resolution satellite imagery based digital orthophoto (DOP) and a comprehensive set of analytical metrics followed by some machine learning techniques. The process includes initial predictions with DOP2021 imagery, enhancement using SPOT2021 and SPOT2023 (Satellite pour l'Observation de la Terre) images for higher resolution analysis, and a series of steps involving metric calculation, normalization, principal component reduction, and unsupervised clustering. Experimental outcome shows the effectiveness of the proposed method to distinguish physical changes within the areas of interest, demonstrating significant applicability in large-scale analysis.

### Brief description of the figures:

In the following, embodiments of the present invention are described in more detail with reference to the figures, in which:
- Fig. 1: illustrates an apparatus for image pair analysis according to an embodiment.
- Fig. 2: illustrates an apparatus for image pair analysis, which further comprises an input interface.
- Fig. 3: illustrates sample Hi Res and Low Res images.
- Fig. 4: illustrates metrics according to an embodiment before applying normalization.
- Fig. 5: illustrates metrics according to an embodiment after applying normalization.
- Fig. 6: illustrates a result of a K means clustering with K = 4 according to an embodiment.
- Fig. 7: illustrates a scatter plot with a random sample of 250 points that are human annotated for the cluster 0 according to an embodiment.
- Fig. 8: illustrates an example for the cluster 0 according to an embodiment.
- Fig. 9: illustrates a scatter plot of a random sample of 250 points from the cluster 3 according to an embodiment.
- Fig. 10: illustrates an example for the cluster 3 according to an embodiment.
- Fig. 11: illustrates a scatter plot of a random sample of 250 points from the cluster 1 according to an embodiment.
- Fig. 12: illustrates an example for the cluster 1 according to an embodiment.
- Fig. 13: illustrates a scatter plot of a random sample of 250 points from the cluster 2 according to an embodiment.
- Fig. 14: illustrates an example for the cluster 2 according to an embodiment.

### Detailed description of particular embodiments of the present invention:

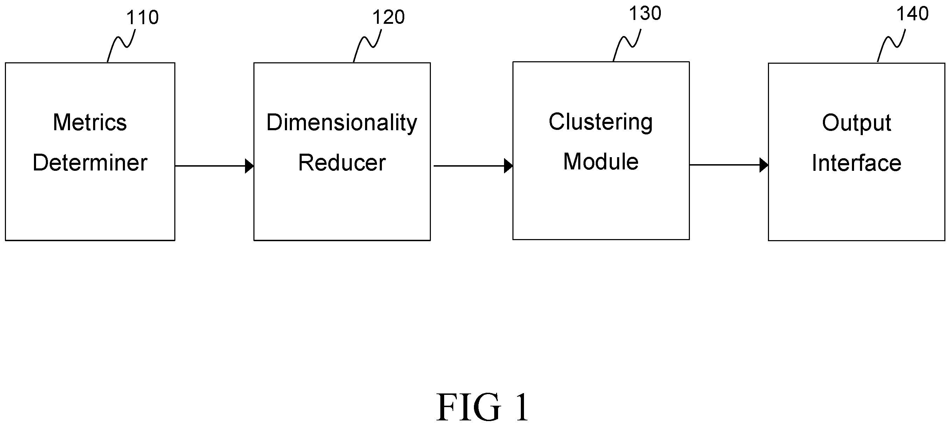

Fig. 1 illustrates apparatus for image pair analysis according to an embodiment.

The apparatus comprises a metrics determiner 110 for determining three or more metrics for each image pair of a plurality of image pairs. Each of the three or more metrics indicates a metric for a difference between two images of the image pair.

Moreover, the apparatus comprises a dimensionality reducer 120 for conducting a dimensionality reduction to obtain two or more principal components depending on the three or more metrics for each image pair of the plurality of image pairs.

Furthermore, the apparatus comprises a clustering module 130 for clustering the plurality of image pairs into two or more clusters by assigning each of the plurality of image pairs to one of the two or more clusters depending on the two or more principal components of each of the plurality of image pairs.

Moreover the apparatus comprises an output interface 140 for outputting information on the clustering of the plurality of image pairs or for outputting information that depends on the clustering of the plurality of image pairs.

In the following, particular embodiments are described in detail.

At first, image collection according to particular embodiments is described.

The process of collecting Spot 21 and Spot 23 images, each with a 1.5 m resolution, for specified field sectors/polygons.

In total, there may, for example, be 75077 images that are to be compared in order to find which pair of images that are predicted to be brownfield in 2021 exhibit a significant structural change such as a solar park or a new building that makes the prediction invalid in more current date. Here, one needs to be aware that the low resolution panchromatic images that are taken in 2021 differ from 2023 due to various reasons starting from different sensors in satellite to environmental and lighting conditions.

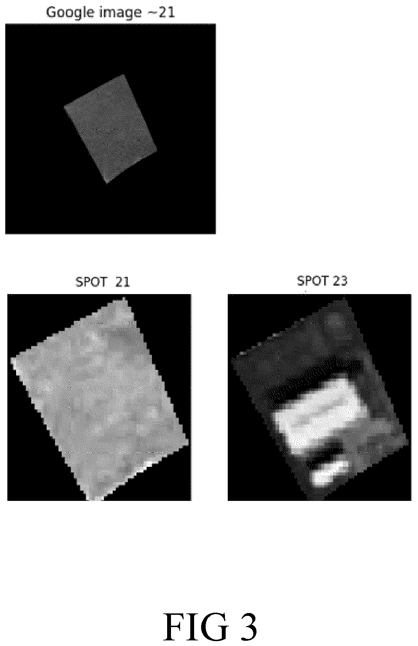

Fig. 3 illustrates sample Hi Res and Low Res images. In particular, Fig. 3 depicts an example of SPOT images.

Here the Hi resolution Google^{®} image which was captured during 2021 and was predicted to be brownfield and the spot image captured during same period show that the our current trained model is able to classify these image to be a brownfield, but the SPOT 23 image shows a completely finished building with potential active business, which makes this site to be no longer a brownfield. And as the model doesn't have a more current Hires image due to practical and economical limitations, this method serves the purpose to establish preliminary information about the current state and can be used as an lead to prioritise which areas have to be tasked by the satellite companies, perhaps.

In the following, metric calculation according to embodiments is described.

According to an embodiment, the metrics determiner 110 may, e.g., be configured to determine the three or more metrics for each of the plurality of image pairs, such that the three or more metrics comprise three or more of the following metrics:
a mean squared error metric,
a peak signal-to-noise ratio metric,
an ERGAS metric,
a visual information fidelity metric.

MSE (Mean Squared Error), which is the deviation of an estimator measures the average of the squares of the errors, e.g., that is, the average squared difference between the estimated values and the actual value.

PSNR (Peak Signal-to-Noise Ratio), which is the ratio between the maximum possible power of a signal and the power of corrupting noise that affects the fidelity of its representation.

ERGAS (Erreur Relative Globale Adimensionnelle de Synthèse), which is a more advanced image quality index than RMSE. ERGAS is a global statistic expressing the quality of the enhanced resolution image. ERGAS measures the transition between spatial and spectral information.

VIF (Visual Information Fidelity; VIF), which has an interesting feature: it can capture the effects of linear contrast enhancements on images, and quantify the improvement in visual quality. A VIF value greater than unity indicates this improvement, while a VIF value less than unity signifies a loss of visual quality.

In an embodiment, the metrics determiner 110 may, e.g., be configured to determine the three or more metrics for each of the plurality of image pairs, such that the three or more metrics comprise the mean squared error metric, the peak signal-to-noise ratio metric, the ERGAS metric, and the visual information fidelity metric.

Now, normalization and dimensionality reduction according to particular embodiments is described.

According to an embodiment, the dimensionality reducer 120 may, e.g., be configured to conduct the dimensionality reduction to obtain exactly two principal components from the three or more metrics for each image pair of the plurality of image pairs.

In an embodiment, the metrics determiner 110 may, e.g., be configured to normalize the three or more metrics of each image pair of the plurality of image pairs to obtain three or more normalized metrics of each image pair of the plurality of image pairs. The dimensionality reducer 120 may, e.g., be configured to conduct the dimensionality reduction using the three or more normalized metrics of each image pair of the plurality of image pairs to obtain the two or more principal components.

With respect to the above example, the above discussed metrics may, for example, be calculated on the 75077 paired images (SPOT 21 and SPOT 23) which are clipped using the same polygon that the Hi res image which was predicted to be a brownfield.

These values are normalized across the dataset. This normalisation step is critical and has to performed as in the later stage, embodiments employ first the dimensionality reduction, distance and kernel density based clustering algorithms, wherein these algorithms are range sensitive.

Next step in this process is to express these normalized metrics in two dimensions using the technique of dimensionality reduction.

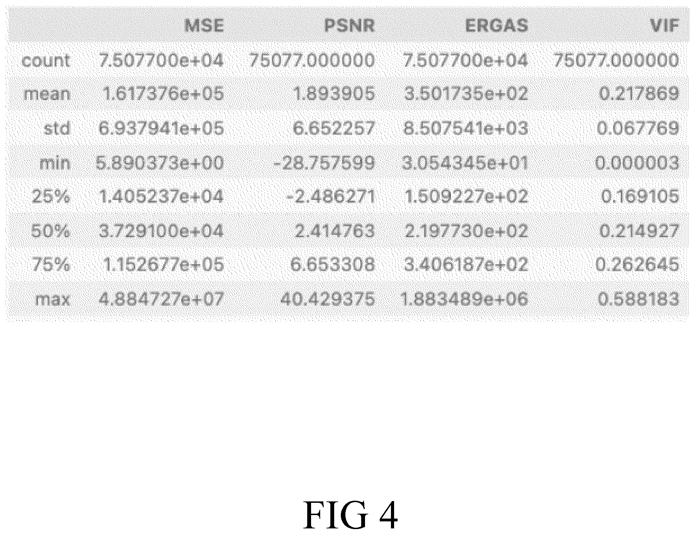

Fig. 4 illustrates metrics according to an embodiment before applying normalization.

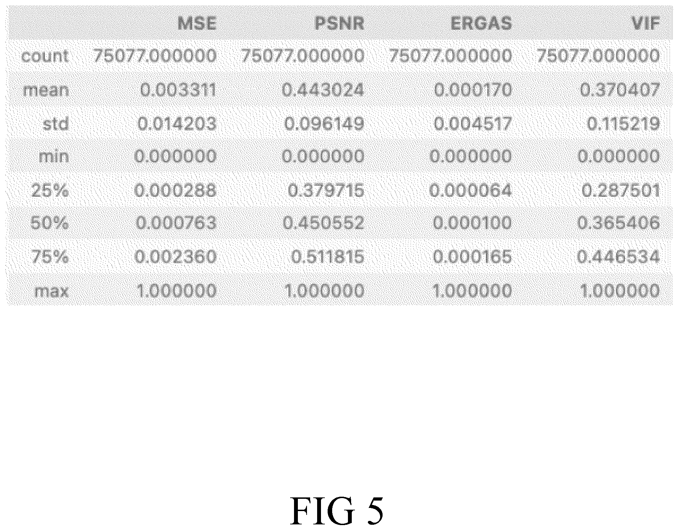

Fig. 5 illustrates metrics according to an embodiment after applying normalization.

In the following, clustering according to particular embodiments is described.

According to an embodiment, the clustering module 130 may, e.g., be configured to assign each of the plurality of image pairs to one of the two or more clusters depending on the two or more principal components of each of the plurality of image pairs, so that each cluster of the two or more clusters indicates whether or not a significant difference between two images of an image pair of the plurality of image pairs within the cluster is likely.

In an embodiment, the clustering module 130 may, e.g., be configured to conduct a K means clustering algorithm depending on the two or more principal components of each of the plurality of image pairs to assign each the plurality of image pairs to one of two or more clusters.

According to an embodiment, the clustering module 130 may, e.g., be configured to conduct clustering the plurality of image pairs two or more times by conducting a K means clustering algorithm to obtain two or more cluster configurations, wherein for each of the two or more times, the K means clustering algorithm is conducted with a different K, K being an integer with K ≥ 2.

For example, clustering may at first be conducted by conducting unsupervised K means clustering with a start value for K, for example, with K = 2, or K = 3, or K = 4, or K = 6, or K = 10.

After conducting the clustering with the start value, a quality of the clustering may, e.g., be examined, e.g., by a user.

For this purpose, the apparatus may, e.g., provide an example subset of image pairs of each of the two or more clusters to the user. Thus, the user does not have to examine all image pairs of a cluster, but only the reduced number of image pairs in the example subset.

Therefore, in an embodiment, the output interface 140 may, e.g., be configured to output image pairs of an example subset of the plurality of image pairs which are comprised by a particular cluster of the two or more clusters, wherein a number of image pairs of the example subset being output is smaller than a total number of image pages being comprised by the particular cluster.

According to an embodiment, the number of image pairs of the example subset being output may, e.g., be at least 90 % smaller than the total number of image pages being comprised by the particular cluster.

When examining the image pairs of the example subset, the user may, e.g., determine for each image pair of the example subset of the considered cluster, whether the image pair shows a significant difference or not, or if the user cannot clearly determine if the difference between the two images of the image pair is significant.

As a first result of examining the example subset of the considered cluster, the user may determine, if most of the image pairs of the example subset of the considered cluster exhibit significant differences, or if most of the image pairs of the considered cluster do not exhibit significant differences.

Moreover, as a second result of examining the example subset of the considered cluster, the user may, e.g., determine whether or not the considered cluster is sufficiently homogenous. The image pairs of the example subset of a considered cluster may, e.g., be sufficiently homogenous, if a sufficiently large percentage of all image pairs, for example, at least 80 % or at least 90 % or at least 95 % exhibit significant differences, or if a sufficiently large percentage of all image pairs, for example, at least 80 % or at least 90 % or at least 95 % do not exhibit significant differences.

After examining all example subsets of all clusters, e.g., the user can determine if the cluster configuration, e.g., the assignment of the image pairs to the two or more clusters, is overall sufficiently homogenous. This may, for example, be the case, if each of the two or more clusters are sufficiently homogenous.

If the clusters of the cluster configuration are not sufficiently homogenous, the clustering module 130 may, e.g., repeat the clustering of all image pairs, but, e.g., with a different number of clusters. For example, when considering K means clustering, K may, e.g., be changed from its start value 4 to 6. If K = 6 is does also not provide a homogenous clustering, K = 8 or K = 10 may, e.g., be tested. If clustering gets worse, K may, e.g., be reduced instead of increased and K = 3 may, e.g., be tested.

However, if the cluster configuration is sufficiently homogenous, no further clustering is needed. The output interface 140 of the apparatus may, e.g., then output information on all image pairs of those clusters, which mostly exhibits image pairs that exhibit significant differences. Further analysis, e.g., by a user, then only has to be conducted for these image pairs, but not for image pairs of clusters that mostly exhibit image pairs without significant differences.

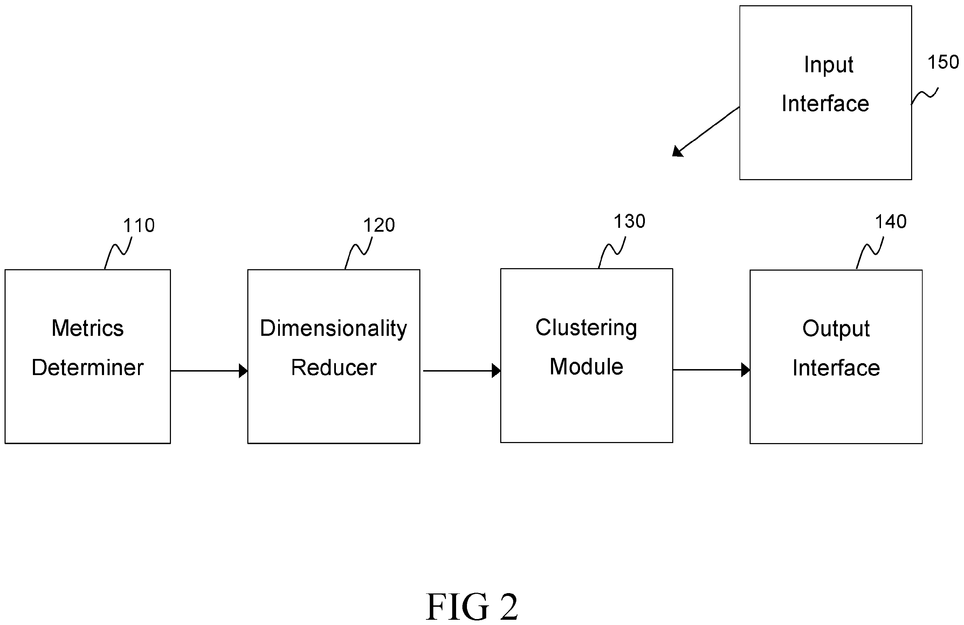

Fig. 2 illustrates a particular embodiment, where the apparatus comprises an input interface 150 which allows a user to input for each image pair of the image pairs of the example subset if the user agrees or if the user does not agree with the association of the image pair to the cluster or if the user cannot decide on an agreement to the association. The apparatus may, e.g., be configured to store the input.

According to an embodiment, the clustering module 130 may, e.g., be configured to conduct clustering the plurality of image pairs two or more times to obtain two or more cluster configurations, wherein for each of the two or more times, the clustering module 130 may, e.g., be configured to cluster the plurality of image pairs into a different number of clusters.

In an embodiment, the apparatus may, e.g., be configured to indicate all image pairs of those of the two or more clusters, or those of the two or more clusters, for which a significant difference between two images of an image pair of the plurality of image pairs within the cluster is likely.

In the following, a particular example for unsupervised clustering and cluster investigation (e.g., by a user) is described.

Regarding unsupervised clustering, e.g., the two principal components obtained from dimensional reduction in the example above may, e.g., be utilised as an input for K means clustering algorithm. E.g., with a random sample of experimentation and/or, e.g., human inspection, it is decided to have four clusters where three of the clusters indicated no significant change and one of the cluster indicated a high change.

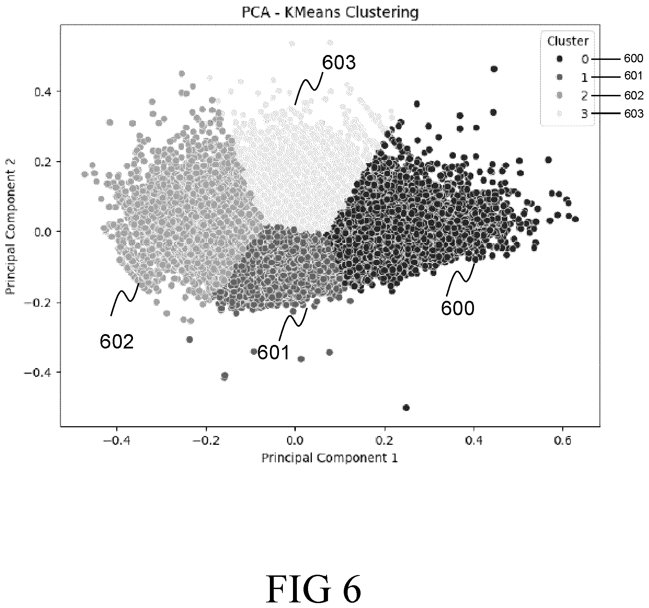

Fig. 6 illustrates a result of a K means clustering with K = 4 according to an embodiment.

| | Count | Decision |
|---|---|---|
| Cluster 0 | 23346 | No significant change |
| Cluster 1 | 17969 | No significant change |
| Cluster 2 | 16906 | Significant change |
| Cluster 3 | 16856 | No significant change |
| Sum | 75077 | |

In Fig. 6, cluster 0 is referred to by reference sign 600, cluster 1 is referred to by reference sign 601, cluster 2 is referred to by reference sign 602, and cluster 3 is referred to by reference sign 603.

When conducting cluster investigation, a detailed examination of each cluster by analyzing 250 randomly selected examples to ensure thorough investigation with help of human annotations. The human annotator is answering the question whether two spot images have a significant change or not by selecting "agree", "disagree" or "can't decide". Here, "agree" means there is a significant change between two images, "disagree" means there is no significant change between two images, "can't decide" means there is no concrete decision as one of the image could have a bit of cloud coverage or some other noise.

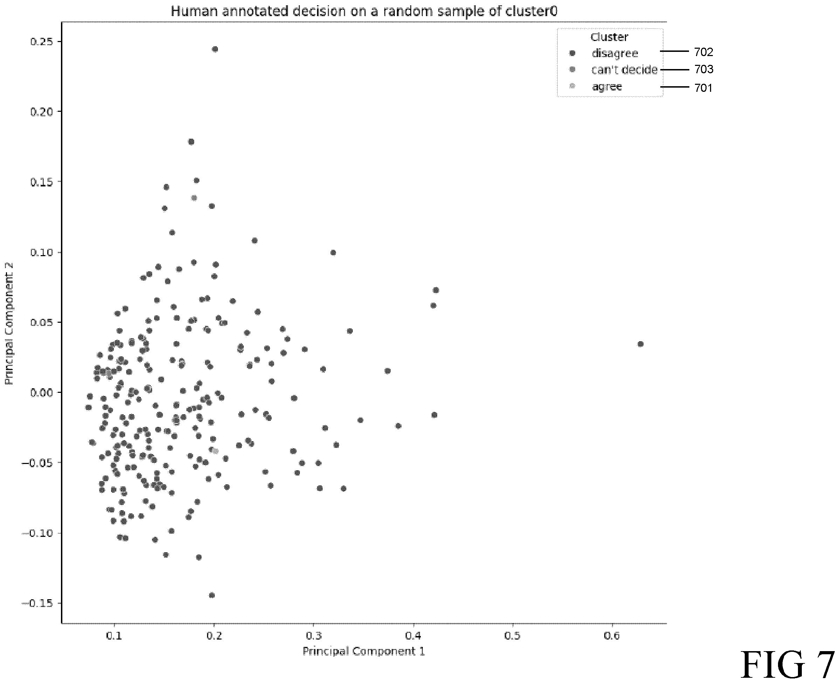

Fig. 7 illustrates a scatter plot of which is a random sample of 250 points that are human annotated for cluster 0 majority of the points are densely packed around the origin, indicating a high concentration of data in the central region. Principal Component 1 values range from approximately 0.1 to 0.6, while Principal Component 2 values span from -0.15 to 0.25. A large proportion of the sample points are labeled as "disagree" (reference sign 702) against the question of is there significant change, which is inline with the decision. In contrast, the labels "can't decide" (reference sign 703) and "agree" (reference sign 701) are sparsely distributed, highlighting areas of uncertainty or agreement within the cluster.

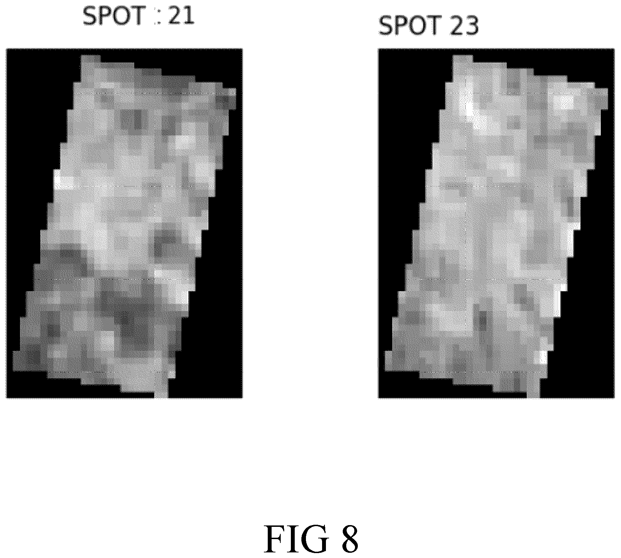

Fig. 8 illustrates an example for the cluster 0 according to an embodiment.

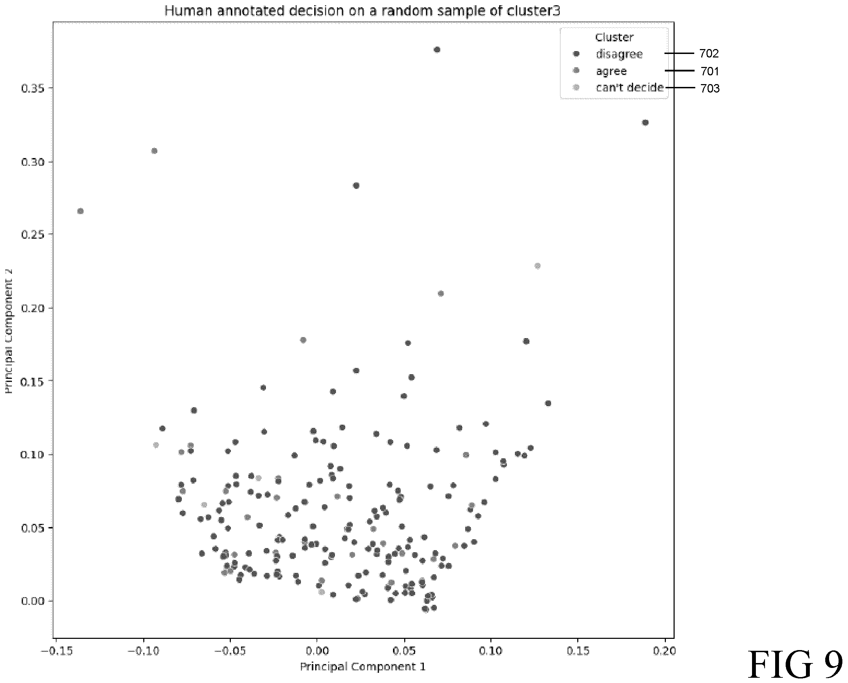

Fig. 9 illustrates a scatter plot of a random sample of 250 points from the cluster 3 according to an embodiment. Principal Component 1 values range from approximately - 0.15 to 0.10, while Principal Component 2 values span from -0.20 to 0.00. The majority of the points are spread across the plot without a dense concentration around the origin, suggesting a distributed presence of data points in the central region. The points are color-coded based on human annotations into three categories: "disagree" (702), "agree" (701), and "can't decide" (703). The plot reveals that a large proportion of the sample points are labeled as "disagree". In contrast, the labels "agree" for change and "can't decide" are sparsely distributed, highlighting fewer areas of agreement or uncertainty within the cluster.

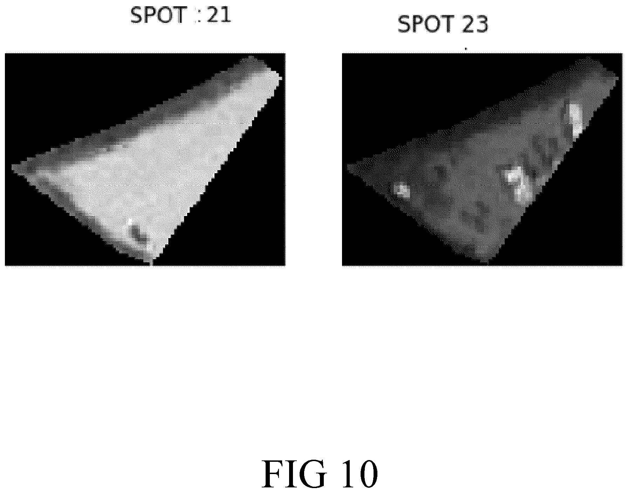

Fig. 10 illustrates an example for the cluster 3 according to an embodiment.

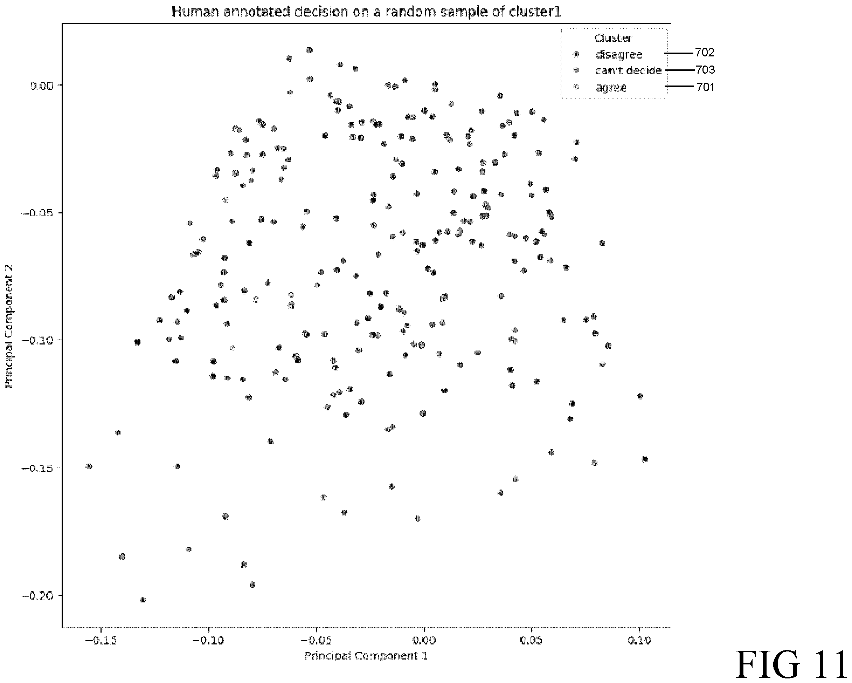

Fig. 11 illustrates a scatter plot of a random sample of 250 points from the cluster 1 according to an embodiment. Each point in the plot is colored according to the annotation categories: "disagree" (702), "agree" (701), and "can't decide" (703). The axes represent Principal Component 1 and Principal Component 2, with values ranging from approximately -0.30 to -0.10 on the x-axis and from -0.2 to 0.2 on the y-axis. There is no clear distinction within this cluster between decision of "agree" and "disagree".

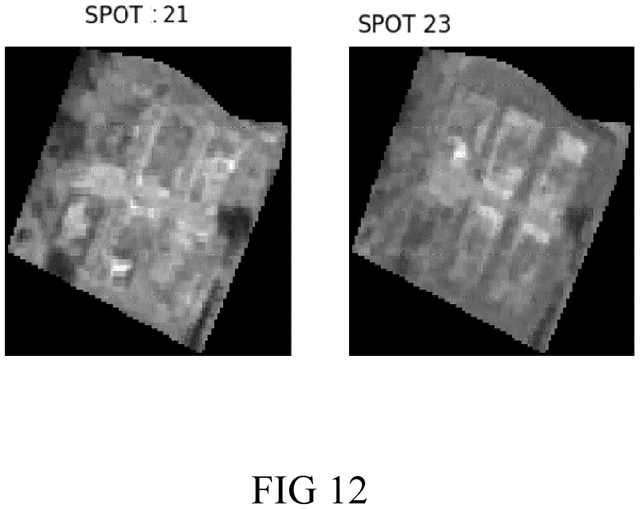

Fig. 12 illustrates an example for the cluster 1 according to an embodiment.

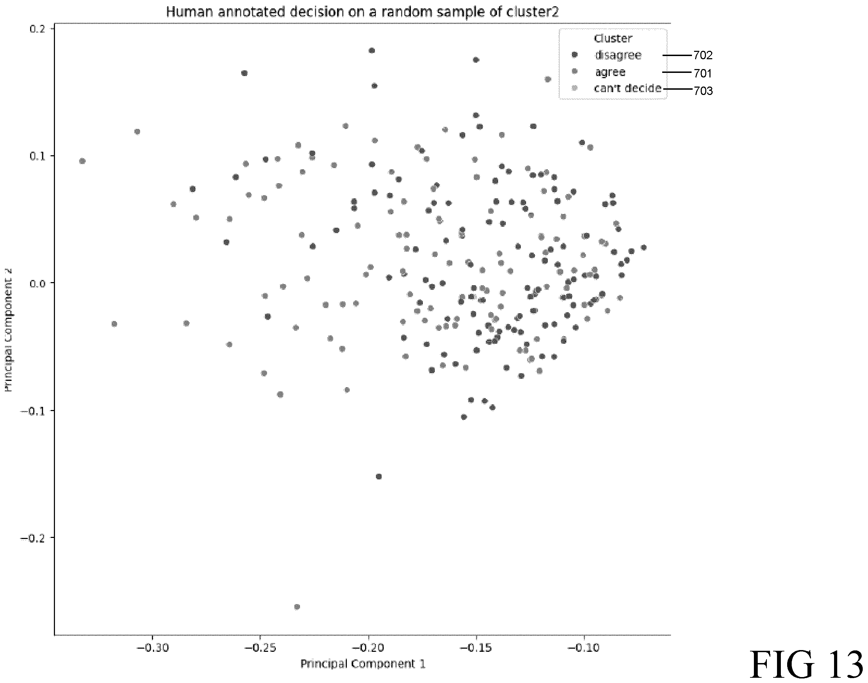

Fig. 13 illustrates a scatter plot of a random sample of 250 points from the cluster 2 according to an embodiment.

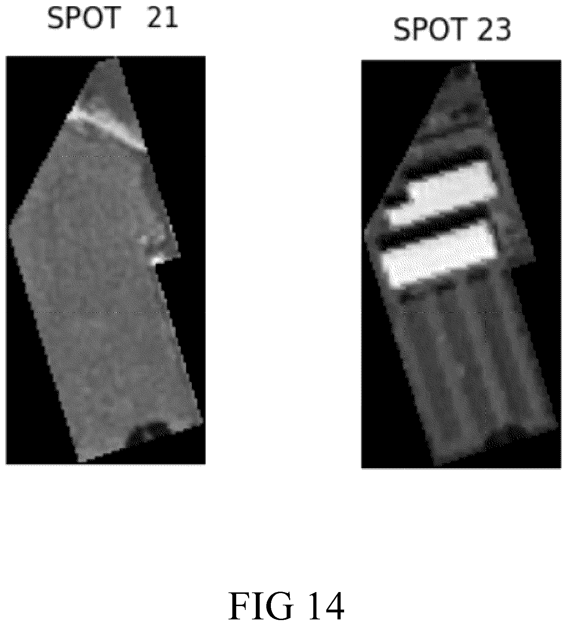

Fig. 14 illustrates an example for the cluster 2 according to an embodiment.

The above concepts demonstrate that the significant changes are pooled into one cluster and the other no significant changes are spread across three homogeneous clusters, indicating further robust analysis has to be made on only one cluster. In the particular example above, this reduces the effort of analysis from 75077 image pairs to almost one fourth of the total images in question that is 16906 images.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. An apparatus for image pair analysis, wherein the apparatus comprises:
a metrics determiner (110) for determining three or more metrics for each image pair of a plurality of image pairs, wherein each of the three or more metrics indicates a metric for a difference between two images of the image pair,
a dimensionality reducer (120) for conducting a dimensionality reduction to obtain two or more principal components depending on the three or more metrics for each image pair of the plurality of image pairs,
a clustering module (130) for clustering the plurality of image pairs into two or more clusters by assigning each of the plurality of image pairs to one of the two or more clusters depending on the two or more principal components of each of the plurality of image pairs, and
an output interface (140) for outputting information on the clustering of the plurality of image pairs or for outputting information that depends on the clustering of the plurality of image pairs.

2. An apparatus according to claim 1,
wherein the dimensionality reducer (120) is configured to conduct the dimensionality reduction to obtain exactly two principal components from the three or more metrics for each image pair of the plurality of image pairs.

3. An apparatus according to claim 1 or 2,
wherein the metrics determiner (110) is configured to normalize the three or more metrics of each image pair of the plurality of image pairs to obtain three or more normalized metrics of each image pair of the plurality of image pairs, and
wherein the dimensionality reducer (120) is configured to conduct the dimensionality reduction using the three or more normalized metrics of each image pair of the plurality of image pairs to obtain the two or more principal components.

4. An apparatus according to one of the preceding claims,
wherein the metrics determiner (110) is configured to determine the three or more metrics for each of the plurality of image pairs, such that the three or more metrics comprise three or more of the following metrics:
a mean squared error metric,
a peak signal-to-noise ratio metric,
an ERGAS metric,
a visual information fidelity metric.

5. An apparatus according to claim 4,
wherein the metrics determiner (110) is configured to determine the three or more metrics for each of the plurality of image pairs, such that the three or more metrics comprise the mean squared error metric, the peak signal-to-noise ratio metric, the ERGAS metric, and the visual information fidelity metric.

6. An apparatus according to one of the preceding claims,
wherein the clustering module (130) is configured to assign each of the plurality of image pairs to one of the two or more clusters depending on the two or more principal components of each of the plurality of image pairs, so that each cluster of the two or more clusters indicates whether or not a significant difference between two images of an image pair of the plurality of image pairs within the cluster is likely.

7. An apparatus according to one of the preceding claims,
wherein the output interface (140) is configured to output image pairs of an example subset of the plurality of image pairs which are comprised by a particular cluster of the two or more clusters, wherein a number of image pairs of the example subset being output is smaller than a total number of image pages being comprised by the particular cluster.

8. An apparatus according to claim 7,
wherein the number of image pairs of the example subset being output is at least 90 % smaller than the total number of image pages being comprised by the particular cluster.

9. An apparatus according to claim 7 or 8,
wherein the apparatus comprises an input interface (150) which allows a user to input for each image pair of the image pairs of the example subset if the user agrees or if the user does not agree with the association of the image pair to the cluster or if the user cannot decide on an agreement to the association, and
wherein the apparatus is configured to store the input.

10. An apparatus according to one of the preceding claims,
wherein the clustering module (130) is configured to conduct clustering the plurality of image pairs two or more times to obtain two or more cluster configurations, wherein for each of the two or more times, the clustering module (130) is configured to cluster the plurality of image pairs into a different number of clusters.

11. An apparatus according to one of the preceding claims,
wherein the clustering module (130) is configured to conduct a K means clustering algorithm depending on the two or more principal components of each of the plurality of image pairs to assign each the plurality of image pairs to one of two or more clusters.

12. An apparatus according to one of claims 1 to 9,
wherein the clustering module (130) is configured to conduct clustering the plurality of image pairs two or more times by conducting a K means clustering algorithm to obtain two or more cluster configurations, wherein for each of the two or more times, the K means clustering algorithm is conducted with a different K, K being an integer with K ≥ 2.

13. An apparatus according to one of the preceding claims,
wherein the apparatus is configured to indicate all image pairs of those of the two or more clusters, or those of the two or more clusters, for which a significant difference between two images of an image pair of the plurality of image pairs within the cluster is likely.

14. A method for image pair analysis, wherein the method comprises:
determining three or more metrics for each image pair of a plurality of image pairs, wherein each of the three or more metrics indicates a metric for a difference between two images of the image pair,
conducting a dimensionality reduction to obtain two or more principal components depending on the three or more metrics for each image pair of the plurality of image pairs,
clustering the plurality of image pairs into two or more clusters by assigning each of the plurality of image pairs to one of the two or more clusters depending on the two or more principal components of each of the plurality of image pairs, and
outputting information on the clustering of the plurality of image pairs or for outputting information that depends on the clustering of the plurality of image pairs.

15. A computer program for implementing the method of claim 14 when being executed on a computer or signal processor.
